(19) **Europäisches Patentamt / European Patent Office / Office européen des brevets**

(11) **EP 2 856 630 B1**

(12) **FASCICULE DE BREVET EUROPEEN**

(45) Date de publication et mention de la délivrance du brevet:
**16.11.2016 Bulletin 2016/46**

(21) Numéro de dépôt: **13729993.9**

(22) Date de dépôt: **27.05.2013**

(51) Int Cl.:
*H02P 9/10* (2006.01)   *H02P 9/02* (2006.01)
*H02P 9/14* (2006.01)   *H02J 7/24* (2006.01)

(86) Numéro de dépôt international:
**PCT/FR2013/051167**

(87) Numéro de publication internationale:
**WO 2013/178921 (05.12.2013 Gazette 2013/49)**

(54) **PROCEDE DE COMMANDE D'UN DISPOSITIF DE REGULATION D'UN ALTERNATEUR DE VEHICULE AUTOMOBILE, DISPOSITIF DE REGULATION ET ALTERNATEUR CORRESPONDANT**

VERFAHREN ZUR STEUERUNG EINER VORRICHTUNG ZUR REGELUNG EINER LICHTMASCHINE EINES KRAFTFAHRZEUGS, REGELUNGSVORRICHTUNG UND ENTSPRECHENDE LICHTMASCHINE

METHOD OF CONTROLLING A DEVICE FOR REGULATING A MOTOR VEHICLE ALTERNATOR, REGULATING DEVICE AND CORRESPONDING ALTERNATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.05.2012  FR 1254951**

(43) Date de publication de la demande:
**08.04.2015  Bulletin 2015/15**

(73) Titulaire: **Valeo Equipements Electriques Moteur
94046 Créteil Cedex (FR)**

(72) Inventeurs:
• **FOURMY, Stéphane**
**F-91330 Yerres (FR)**
• **TISSERAND, Pierre**
**F-94450 Limeil Brevannes (FR)**
• **LY, Sokha**
**F-75013 Paris (FR)**

(56) Documents cités:
**EP-A1- 0 849 855     WO-A1-2010/049618**

EP 2 856 630 B1

**Description**

**DOMAINE TECHNIQUE DE L'INVENTION.**

La présente invention concerne un procédé de commande d'un dispositif de régulation d'un alternateur de véhicule automobile. L'invention concerne également un dispositif de régulation mettant en oeuvre ce procédé, ainsi que l'alternateur comprenant ce dispositif de régulation.

**ARRIERE PLAN TECHNOLOGIQUE DE L'INVENTION.**

Dans le domaine de l'automobile, il est bien connu de maintenir la tension fournie au réseau électrique de bord par l'alternateur du véhicule à une valeur de consigne prédéterminée, indépendamment de la vitesse de rotation du moteur ou de la consommation électrique des équipements, au moyen d'un dispositif de régulation dit « régulateur ».

De nos jours, les équipementiers de l'automobile ont développé des alternateurs très performants en mettant en oeuvre des systèmes électroniques de puissance contrôlés par des circuits faisant appel à des techniques numériques, reposant notamment sur l'utilisation de microprocesseurs ou microcontrôleurs.

A la différence des régulateurs à bilames d'autrefois, qui fonctionnaient autour d'une tension de régulation fixe indépendamment du mode de fonctionnement du véhicule, les dispositifs de régulation électroniques modernes mettent à profit les capacités de traitement de l'électronique pour recevoir des valeurs de consigne variables transmises par une unité de contrôle électronique du moteur dans le but d'optimiser le prélèvement de couple en fonction de la production d'énergie électrique nécessaire.

L'entité inventive a reconnu de longue date qu'une façon de transmettre de manière simple et fiable ces valeurs de consigne dans l'environnement perturbé du capot moteur était de mettre en oeuvre une transmission par impulsions modulées en largueur PWM (acronyme de l'anglais « Pulse Width Modulation »), telle que décrit notamment dans les demandes de brevet français FR2757325 et FR2938135,

Pour des raisons de coût, il n'est généralement pas utilisé de câble blindé pour assurer la liaison entre l'unité électronique de contrôle du moteur thermique et le régulateur. Il en résulte que la qualité du signal PWM est dégradée et que des impulsions parasites peuvent conduire à une réception par le régulateur de valeurs de consigne erronées, bien que la transmission PWM soit robuste en soi.

Les méthodes connues de l'état de la technique pour faire la distinction entre perturbations et signaux utiles sont de type "passe bas", au moyen d'un filtre capacitif ou d'un dispositif éliminant les impulsions transitoires (dit "antiglitch").

La méthode qui consiste à atténuer les perturbations grâce à un filtre passe bas trouve ces limites dans le fait que celui-ci est intégré dans l'ASIC (acronyme de " Application Specific Integrated Circuit", en terminologie anglaise, c'est-à-dire "circuit intégré pour application particulière"). Pour des raisons de surface de puce et de coût, la taille et la valeur des composants du filtre (capacité) sont limitées.

Les méthodes de filtrage qui consistent à utiliser une capacité additionnelle dans le porte balais permettent d'atténuer les perturbations efficacement mais génèrent une déformation du signal utile. Cette déformation du signal utile est d'autant plus pénalisante que souvent la charge et la décharge de cette capacité sont asymétriques.

L'utilisation d'un "antiglitch" consiste à éliminer, via un traitement numérique, les états hauts et bas de la communication PWM dont la durée est inférieure à une valeur prédéterminée.

Cette dernière méthode est très efficace, mais ne peut être utilisée que pour l'élimination des perturbations courtes. En effet, si cette valeur prédéterminée est trop longue, le dispositif "antiglitch" génèrera une perte de précision pour le plus petit et le plus grand rapport cyclique.

Les différentes méthodes de discrimination entre perturbations et signaux utiles résumées ci-dessus sont couramment mises en oeuvre dans les régulateurs connus de l'état de la technique.

Mais, il est prévisible qu'elles trouveront rapidement leurs limites quand des dispositifs futurs devront satisfaire aux tests normalisés relatifs à la protection des équipements électroniques dans le domaine de l'automobile de plus en plus contraignants (Pulse ISO, SR, BCI, etc...) dans un environnement de plus en plus pollué (par exemple en raison du croisement du câble haute tension de l'allumage et du câble de communication du régulateur).

Il existe donc un besoin pour une méthode permettant d'améliorer la robustesse d'une transmission PWM sous le capot moteur d'un véhicule automobile en complément des méthodes par filtrage capacitif ou "antiglitch".

**DESCRIPTION GENERALE DE L'INVENTION.**

La présente invention vise par conséquent à répondre à ce besoin.

Elle a précisément pour objet un procédé de commande d'un dispositif de régulation d'un alternateur de véhicule automobile.

Ce régulateur, de manière connue, asservit une tension continue d'un réseau électrique de bord alimenté par cet alternateur à une valeur de consigne courante en contrôlant un circuit d'excitation.

Le procédé dont il s'agit est du type de ceux consistant à:

- transmettre au dispositif de régulation au moyen d'une ligne de communication des premières impulsions modulées en largeur présentant une période prédéterminée et un rapport cyclique de référence représentatif d'une valeur de consigne de référence;
- détecter les premières impulsions et générer la valeur de consigne courante.

Le procédé selon l'invention est remarquable en ce qu'il consiste en outre à :

- produire des secondes impulsions résultant des premières impulsions détectées;
- mesurer des caractéristiques courantes de ces secondes impulsions;
- comparer ces caractéristiques courantes à des caractéristiques nominales des premières impulsions;
- affecter une valeur de consigne par défaut à la valeur de consigne courante quand les caractéristiques courantes des secondes impulsions sont significativement et répétitivement différentes des caractéristiques nominales des premières impulsions.

De préférence, cette tension de consigne par défaut est déterminée en fonction d'un rapport cyclique par défaut.
Dans le procédé de commande d'un dispositif de régulation d'un alternateur de véhicule automobile selon l'invention, une transition entre une valeur de consigne antérieure et la valeur de consigne par défaut suit avantageusement une loi temporelle prédéterminée.
Le procédé est aussi remarquable en ce qu'il consiste en outre de préférence à compter un premier nombre de fois où ces caractéristiques courantes sont différentes des caractéristiques nominales et à affecter la valeur de consigne par défaut à la valeur de consigne courante quand ce premier nombre est supérieur ou égal à un premier seuil prédéterminé.
Fort avantageusement, le procédé consiste aussi en outre à compter un second nombre de fois consécutives où les caractéristiques courantes sont compatibles avec les caractéristiques nominales et à maintenir la valeur de consigne courante à la valeur de consigne par défaut quand ce second nombre est inférieur à un second seuil prédéterminé.
Dans le procédé de commande d'un dispositif de régulation d'un alternateur de véhicule automobile selon l'invention, les caractéristiques courantes des secondes impulsions comprennent de préférence une période courante et un rapport cyclique courant, et les caractéristiques nominales des premières impulsions comprennent, d'une part, une période minimale prédéterminée et une période maximale prédéterminée correspondant à cette période prédéterminée, et d'autre part, un rapport cyclique minimal prédéterminé et un rapport cyclique maximal prédéterminé correspondant au rapport cyclique de référence.
Le procédé est également remarquable en ce qu'il consiste en outre avantageusement à :

- calculer une moyenne glissante pendant une durée prédéterminée d'une pluralité de valeurs du rapport cyclique courant comprises entre le rapport cyclique minimal prédéterminé et le rapport cyclique maximal prédéterminé quand la période courante est comprise entre la période minimale prédéterminée et la période maximale prédéterminée ;
- à déterminer la tension de consigne courante en fonction de cette moyenne glissante.

De préférence, on affecte à la tension de consigne courante pendant cette durée prédéterminée une dernière valeur valide de la moyenne glissante quand les caractéristiques courantes des secondes impulsions sont différentes des caractéristiques nominales des premières impulsions.
L'invention concerne également un dispositif de régulation d'un alternateur de véhicule automobile apte à la mise en oeuvre du procédé décrit ci-dessus. Un tel dispositif de régulation est du type de ceux, connus en soi, comprenant :

- des moyens d'asservissement d'une tension continue d'un réseau électrique de bord alimenté par cet alternateur à une valeur de consigne courante en contrôlant un circuit d'excitation ;
- des moyens de réception via une entrée de communication de premières impulsions modulées en largeur présentant à l'émission une période prédéterminée et un rapport cyclique de référence représentatif d'une valeur de consigne de référence;
- des moyens de détection des premières impulsions et des moyens de génération de la valeur de consigne courante.

Le dispositif de régulation visé également par l'invention est remarquable en ce qu'il comprend en outre avantageusement:

- des moyens de production de secondes impulsions modulées en largeur résultant des premières impulsions détectées;
- des moyens de mesure des caractéristiques courantes de ces secondes impulsions;
- des moyens de comparaison de ces caractéristiques courantes à des caractéristiques nominales des premières impulsions;
- des moyens d'affectation d'une valeur de consigne par défaut à la valeur de consigne courante quand les caractéristiques courantes des secondes impulsions sont différentes de ces caractéristiques nominales.

De préférence, ce dispositif de régulation comprend en outre:

- des moyens de mémorisation à décalage d'une séquence de valeurs d'un rapport cyclique courant correspondant à des secondes impulsions présentant des caractéristiques courantes compatibles avec les caractéristiques nominales des premières impulsions;
- des moyens de calcul d'une moyenne courante de cette séquence de valeurs;
- des moyens de détermination de la tension de consigne courante en fonction de cette moyenne courante.

Le dispositif de régulation comprend en outre avantageusement des moyens de temporisation d'une transition entre une valeur de consigne antérieure et la valeur de consigne par défaut.

L'invention concerne aussi un alternateur de véhicule automobile comprenant le dispositif de régulation présentant les caractéristiques spécifiées ci-dessus.

L'invention porte également sur une mémoire informatique qui comprend un code informatique représentatif du procédé de commande d'un dispositif de régulation d'un alternateur de véhicule automobile décrit ci-dessus .

Ces quelques spécifications essentielles auront rendu évidents pour l'homme de métier les avantages apportés par le procédé de commande d'un dispositif de régulation selon l'invention, ainsi que par le dispositif de régulation et l'alternateur correspondant, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** est un schéma électrique général d'un alternateur d'un véhicule automobile muni d'un dispositif de régulation.

La **Figure 2a** montre un exemple de premières impulsions modulées en largeur émises par une unité électronique de contrôle et dont un rapport cyclique de référence est représentatif d'une valeur de consigne de référence selon le diagramme montré sur la **Figure 2b.**

Les **Figures 3a, 3b et 3c** montrent respectivement ces premières impulsions reçues par le dispositif de régulation et présentant des impulsions transitoires dues à des perturbations, ces premières impulsions filtrées et des secondes impulsions résultant de la détection des premières impulsions filtrées.

La **Figure 4 est** un diagramme de temps montrant l'affectation à une valeur de consigne courante soit d'une estimation de la valeur de consigne de référence, soit d'une valeur de consigne par défaut en fonction de l'état de la communication PWM.

La **Figure 5** est un diagramme de temps montrant une loi de transition entre une valeur de consigne courante résultant d'une estimation de la valeur de consigne de référence et une valeur de consigne par défaut.

La **Figure 6** est un organigramme détaillé du procédé de commande du dispositif de régulation d'un alternateur de véhicule automobile selon l'invention.

La **Figure 7** un schéma synoptique du dispositif de régulation selon l'invention.

**DESCRIPTION DES MODES DE REALISATION PREFERES DE L'INVENTION.**

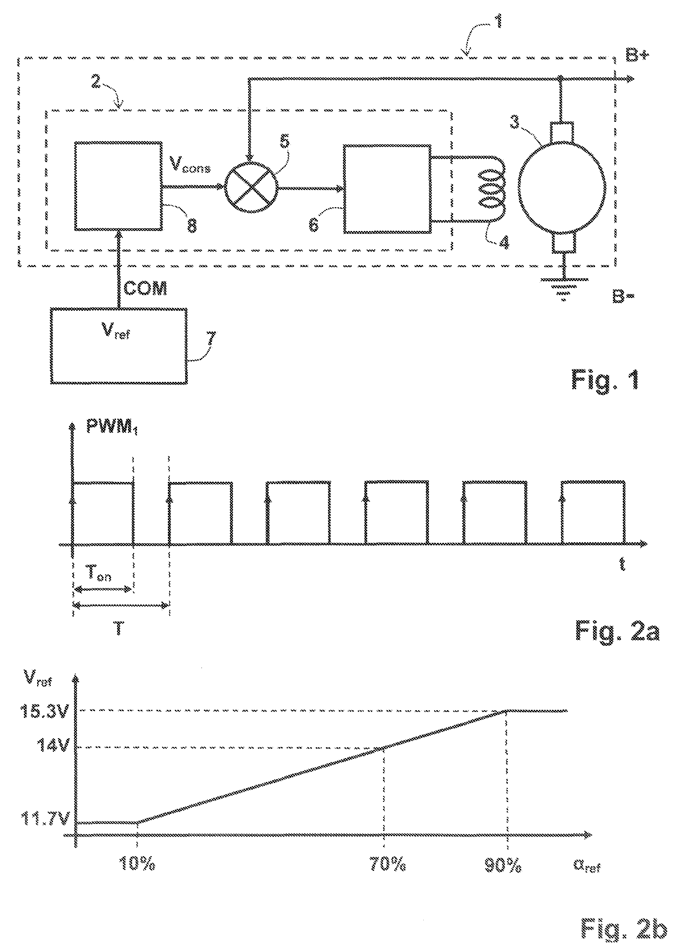

Un alternateur 1 et son dispositif de régulation 2 du type concerné par l'invention, représenté sur la **Figure 1,** comprend :

- un stator 3 dont les enroulements de phases fournissent, après redressement, une tension continue B+, B- au réseau électrique de bord pour recharger une batterie et alimenter diverses charges électriques;
- un circuit d'excitation 4 contrôlé par le dispositif de régulation 2 au moyen d'une boucle d'asservissement 5 et d'un module électronique de puissance 6 permettant de fixer la tension continue B+, B- à une valeur de consigne courante $V_{cons}$.
- un rotor apte à être couplé mécaniquement au moteur thermique du véhicule (non représenté) ;

Dans la plupart des régulateurs 2 des alternateurs 1 qui équipent les véhicules, notamment sur les véhicules de bas de gamme, une valeur de consigne de référence $V_{ref}$ fixant la valeur de consigne courante $V_{cons}$ est prédéterminée.

Cette valeur de consigne fixe $V_{ref}$ est généralement un peu supérieure à 14 V pour charger dans de bonnes conditions un accumulateur au plomb.

Dans des dispositifs de régulation 2 plus complexes d'alternateurs 1 équipant des véhicules de plus haut de gamme, la valeur de consigne de référence $V_{ref}$ est variable en fonction de l'état de charge de la batterie, des charges électriques reliées au réseau électrique de bord, ou des phases de fonctionnement (démarrage, ralenti, accélération, décélération, calage) du moteur.

Cette valeur de consigne de référence $V_{ref}$ est généralement transmise par une unité de contrôle du moteur 7 sur une ligne de communication COM à un module électronique spécifique 8 du régulateur 2.

La transmission de la valeur de consigne de référence $V_{ref}$ est le plus souvent réalisée par une modulation en largeur d'impulsions $PWM_1$, telle que montrée sur la **Figure 2a,** préférée à d'autres types de liaisons, telle qu'une liaison série, pour sa simplicité et sa meilleure immunité au bruit.

Habituellement, la valeur de consigne de référence $V_{ref}$ est comprise entre 11,5 V et 15,5 V, correspondant à un rapport cyclique de référence $\alpha_{ref}$ compris entre 0% et 100%, le rapport cyclique étant défini comme le rapport entre la durée d'un niveau haut $T_{on}$ d'une impulsion rectangulaire et sa période T.

Toutefois, l'expérience montre qu'un rapport cyclique faible inférieur à un premier seuil de l'ordre de 10%, ou au contraire un rapport cyclique élevé supérieur à un second seuil de l'ordre de 90%, est difficilement détectable de manière fiable.

Il en résulte que dans les dispositifs de régulation existants, un rapport cyclique $\alpha_{ref}$ compris entre les premier et second seuils permet seulement d'assigner une valeur de consigne de référence $V_{ref}$ comprise entre une valeur basse de l'ordre de 11,7 V et une valeur haute de l'ordre de 15,3 V, comme le montre la **Figure 2b.**

Des premières impulsions $PWM_1$ émises par l'unité électronique de contrôle 7, telles que représentées sur la **Figure 2a,** sont le plus souvent dégradées après leur parcours dans le câble de liaison avec le régulateur 2. Le signal reçu $PWM_r$ présente de nombreuses impulsions transitoires 9, comme le représente la

**Figure 3a.**

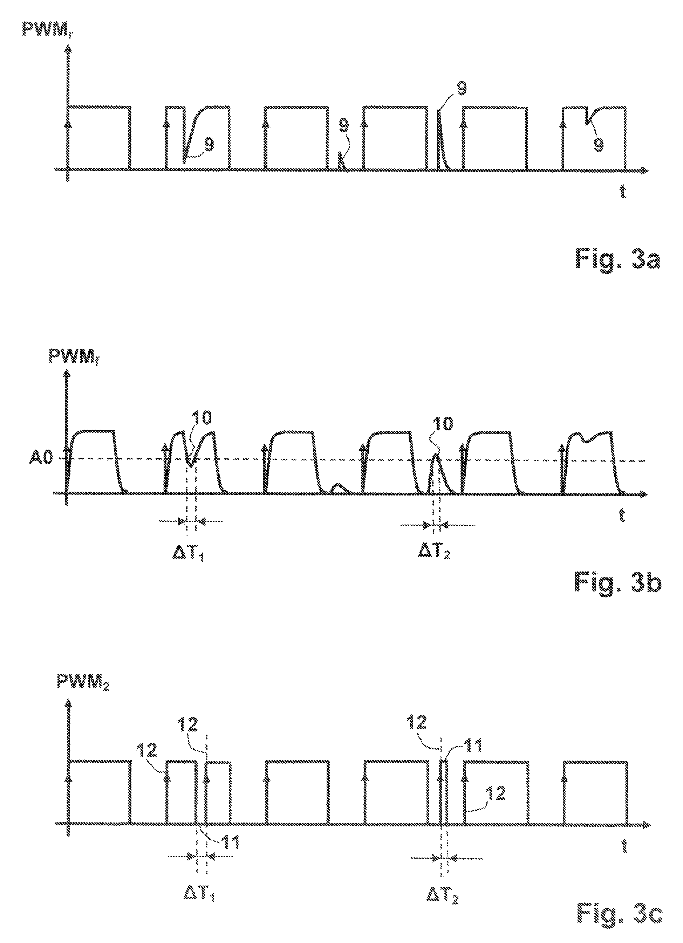

Un filtrage capacitif, connu en soi, permet d'atténuer ces perturbations, sans les supprimer totalement, comme le montre la représentation du signal filtré $PWM_f$ de la **Figure 3b.**

Classiquement, le signal filtré $PWM_f$ est comparé à un niveau de référence $A_0$ pour détecter les premières impulsions et produire des secondes impulsions $PWM_2$, représentées sur la **Figure 3c.**

Comme le montre bien la comparaison des **Figures 3a, 3b et 3c,** des impulsions transitoires 9 dont les amplitudes 10 après filtrage sont inférieures ou supérieures au niveau de référence $A_0$ pendant des durées significatives $\Delta T_1$, $\Delta T_2$ produisent dans les secondes impulsions $PWM_2$ des états hauts ou bas 11 de mêmes durées $\Delta T_1$, $\Delta T_2$ qui modifient la période apparente (intervalle de temps entre deux fronts montants 12, par exemple) et le rapport cyclique de ces secondes impulsions $PWM_2$.

Ainsi que cela a été rappelé en préambule, il est connu d'éliminer par un traitement numérique les états hauts ou bas 11 dont la durée $\Delta T_1$, $\Delta T_2$ est inférieure à une valeur prédéterminée $\mathbf{T_{ANTI\_GLITCH}}$.

Mais cette méthode n'est pas satisfaisante, car elle génère une perte de précision sur la mesure du rapport cyclique de référence $\alpha_{ref}$ des premières impulsions $PWM_1$ émises par l'unité électronique de contrôle 7.

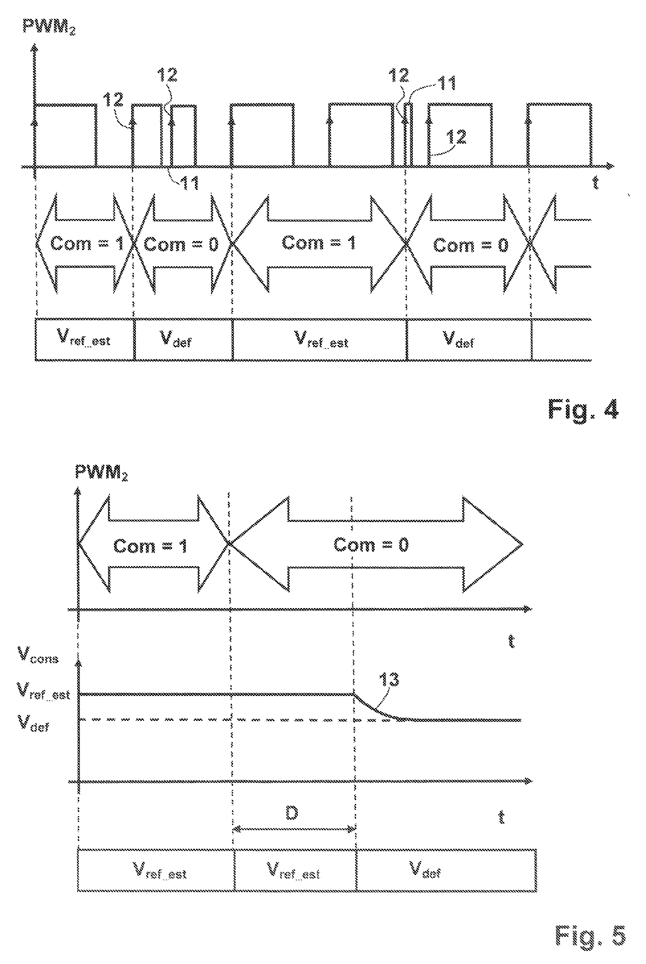

Le procédé de commande d'un dispositif de régulation 2 d'un alternateur 1 selon l'invention, qui sera décrit en détail en liaison avec les **Figures 4, 5 et 6,** permet au contraire de générer une valeur de consigne courante $V_{cons}$ à partir d'une estimation $V_{ref\_est}$ fiable et précise de la valeur de consigne de référence $V_{ref}$ en utilisant une stratégie de détection du signal reçu $PWM_r$ appropriée, et en sécurisant la prise de consigne en cas de forte perturbation de ce signal $PWM_r$.

La sécurisation de la prise de consigne est obtenue en laissant le régulateur 2 dans un mode de fonctionnement interne quand la communication avec l'unité électronique de contrôle 7 est trop perturbée, afin d'éviter que le régulateur n'interprète le signal reçu $PWM_r$ comme de mauvaises consignes de tension et fasse fluctuer de façon anarchique la tension continue B+, B- du réseau de bord.

Pour ce faire, comme le représente symboliquement la **Figure 4,** le procédé selon l'invention affecte une valeur de consigne par défaut $V_{def}$ à la valeur de consigne courante $V_{cons}$ à chaque fois qu'il est estimé que la communication est absente ou perturbée (Com= 0), notamment par la présence de niveaux hauts ou bas 11 de faible durée dans les secondes impulsions $PWM_2$.

Au contraire, quand il est estimé que la communication est correcte (Com= 1), la valeur de consigne courante $V_{cons}$ se voit affecter l'estimation de la valeur de consigne de référence $V_{ref\_est}$.

L'évolution de la valeur de consigne courante $V_{cons}$ lors du passage en mode interne est faite de façon rapide (application instantanée de la valeur de consigne par défaut $V_{def}$), ou alternativement, de préférence, de façon contrôlée suivant une loi temporelle prédéterminée.

Par exemple, comme le montre bien la **Figure 5,** la valeur de consigne par défaut $V_{def}$ est affectée après une temporisation D de l'ordre de 100 ms à la valeur de consigne courante $V_{cons}$.

Une transition 13, à partir d'une valeur de consigne antérieure résultant d'une estimation $V_{ref\_est}$ valide de la valeur de consigne de référence $V_{ref}$ maintenue pendant la durée de la temporisation D, suit un rythme de l'ordre de 100 mV par pas d'incrémentation de la boucle d'asservissement 5 du régulateur 2, qui est dans ce cas une boucle d'asservissement numérique.

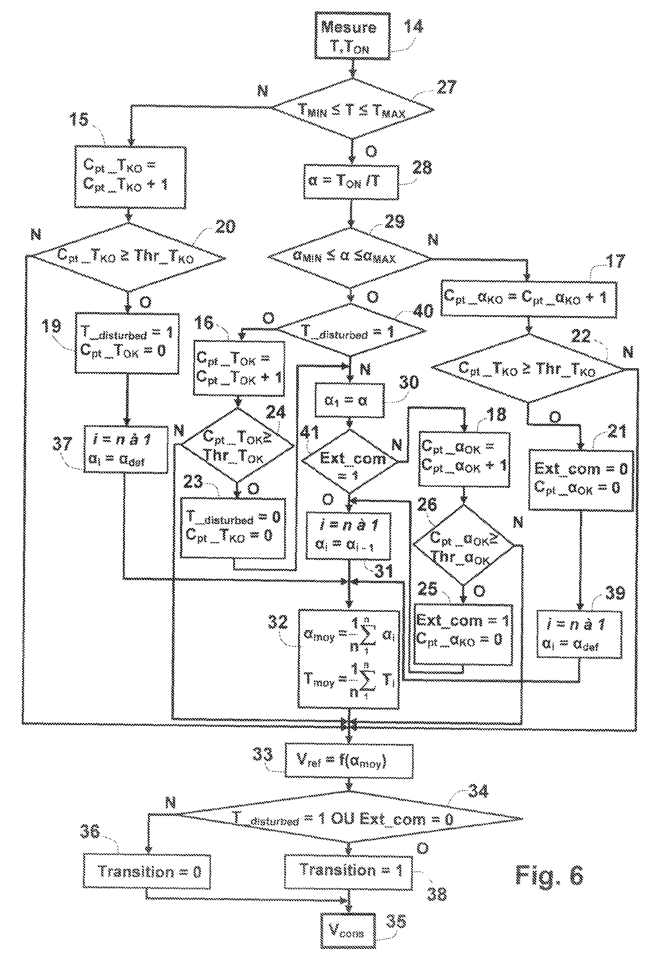

Les différentes étapes du calcul de l'estimation $V_{ref\_est}$ de la valeur de consigne de référence $V_{ref}$ et de la détermination de la qualité de la communication selon le procédé de l'invention sont indiquées de manière détaillée sur la Figure 6.

La stratégie de détection du signal reçu $PWM_r$, propre au procédé selon l'invention, consiste à mesurer 14 les caractéristiques courantes des secondes impulsions $PWM_2$, notamment une période courante T et un rapport cyclique courant $\alpha$ déduit d'une mesure d' une durée d'un niveau haut courante $\mathbf{T_{ON}}$ de ces secondes impulsions $PWM_2$.

Ces caractéristiques courantes sont comparées à des caractéristiques nominales des premières impulsions $PWM_1$, notamment une période minimale prédéterminée $\mathbf{T_{MIN}}$, une période maximale prédéterminée $\mathbf{T_{MAX}}$, un rapport cyclique minimal prédéterminé $\alpha_{MIN}$ et un rapport cyclique maximal prédéterminé $\alpha_{MAX}$.

Quand les caractéristiques courantes des secondes impulsions $PWM_2$ s'écartent significativement et répétitivement des caractéristiques nominales des premières impulsions $PWM_1$, le procédé selon l'invention affecte à la valeur de consigne courante $V_{cons}$ la valeur de consigne par défaut $V_{def}$.

Les variables et paramètres de décision utilisés par le procédé sont les suivants:

- **$C_{pt\_T_{KO}}$** : premier compteur 15 des cas où la période courante T est invalide (c'est-à-dire n'est pas comprise entre la période minimale prédéterminée $T_{MIN}$ et la période maximale prédéterminée $T_{MAX}$).

- **$C_{pt\_T_{OK}}$** : deuxième compteur 16 des cas où la période courante T est valide (c'est-à-dire est comprise entre la période minimale prédéterminée $T_{MIN}$ et la période maximale prédéterminée $T_{MAX}$).

- **$C_{pt\_\alpha_{KO}}$** : troisième compteur 17 des cas où le rapport cyclique courant $\alpha$ est invalide (c'est-à-dire n'est pas compris entre le rapport cyclique minimal prédéterminé $\alpha_{MIN}$ et le rapport cyclique maximal prédéterminé $\alpha_{MAX}$).

- **$C_{pt\_\alpha_{OK}}$** : quatrième compteur 18 des cas où le rapport cyclique courant $\alpha$ est valide (c'est-à-dire est compris entre le rapport cyclique minimal prédéterminé $\alpha_{MIN}$ et le rapport cyclique maximal prédéterminé $\alpha_{MAX}$).

- **$Thr\_T_{KO}$** : premier seuil d'invalidité entraînant un passage dans le mode interne (application de la valeur de consigne par défaut $V_{def}$) et la validation 19 d'un drapeau de communication perturbée **$T_{\_disturbed}$** quand le premier compteur **$C_{pt\_T_{KO}}$** est supérieur ou égal 20.

- **$Thr\_\alpha_{KO}$** : second seuil d'invalidité entraînant un passage dans le mode interne (application de la valeur de consigne par défaut $V_{def}$) et l'invalidation d'un drapeau de communication externe **Ext_com** 21 quand le troisième compteur **$C_{pt\_\alpha_{KO}}$** est supérieur ou égal 22.

- **$Thr\_T_{OK}$** : premier seuil de validité entraînant la sortie du mode interne (affectation de l'estimation $V_{ref\_est}$ de la valeur de consigne de référence $V_{ref}$ à la valeur de consigne courante $V_{cons}$) et l'invalidation 23 du drapeau de communication perturbée **$T_{\_disturbed}$** quand le deuxième compteur **$C_{pt\_T_{OK}}$** est supérieur ou égal 24.

- **$Thr\_\alpha_{OK}$** : second seuil de validité entraînant la sortie du mode interne (affectation de l'estimation $V_{ref\_est}$ de la valeur de consigne de référence $V_{ref}$ à la valeur de consigne courante $V_{cons}$) et la validation 25 du drapeau de communication externe **Ext_com** quand le quatrième compteur **$C_{pt\_\alpha_{OK}}$** est supérieur ou égal 26.

Ces paramètres et variables de décision ne jouent un rôle que quand la communication est perturbée.

Quand la liaison entre l'unité électronique de contrôle 7 et le régulateur 2 est de bonne qualité, la comparaison de la période courante T avec les périodes minimale $T_{MIN}$ et maximale $T_{MAX}$ prédéterminée 27 est le plus souvent satisfaisante et un rapport cyclique courant est calculé 28.

Si la comparaison de ce rapport cyclique courant $\alpha$ avec les rapports cycliques minimal $\alpha_{MIN}$ et maximal $\alpha_{MAX}$ prédéterminés 29 est également satisfaisante, ce rapport cyclique courant $\alpha$ est mémorisé 30.

Il rafraîchit une mémoire tampon à décalage de taille prédéterminée n, contenant n éléments $\alpha_1$..., $\alpha_i$, ..., $\alpha_n$ dont l'élément le plus ancien $\alpha_n$ est éliminé 31.

Une moyenne glissante $\alpha_{moy}$ est calculée 32 à partir des éléments contenus dans la mémoire tampon:

$$\alpha_{moy} = \frac{1}{n} \sum_{1}^{n} \alpha_i$$

Cette moyenne glissante $\alpha_{moy}$ permet d'obtenir 33 une estimation $V_{ref\_est}$ de la valeur de consigne de référence $V_{ref}$ :

$$V_{ref\_est} = f(\alpha_{moy})$$

La communication étant considérée comme non perturbée, le drapeau de communication perturbée **$T_{\_disturbed}$** est invalidé (**$T_{\_disturbed}$** = 0) et le drapeau de communication externe **Ext_com** est validé (**Ext_com**= 1).

Il en résulte 34 que l'estimation $V_{ref\_est}$ de la valeur de consigne de référence $V_{ref}$ est affectée 35 à la valeur de consigne courante $V_{cons}$ sans transition (36 **Transition**= 0).

Ce cas favorable est représenté symboliquement sur les **Figures 4 et 5** pour les intervalles temps où **Com**= 1 (La variable logique **Com** pouvant être définie par la relation **Com = $\overline{T_{\_disturbed}}$ • Ext_com** ).

Dans le cas où la comparaison de la période courante T à la période prédéterminée $T_{ref}$ 27 montre que la mesure n'est pas valide, le premier compteur **$C_{pt\_T_{KO}}$** 15 est incrémenté.

Quand cette période courante T est répétitivement non conforme, c'est-à-dire que le compteur **$C_{pt\_T_{KO}}$** 15 dépasse 20 le premier seuil d'invalidité **$Thr\_T_{KO}$**, le drapeau de communication perturbée **$T_{\_disturbed}$** est validé 19 (**$T_{\_disturbed}$** = 1) et un rapport cyclique par default $\alpha_{def}$ est affecté 37 à chacun des n éléments $\alpha_1$..., $\alpha_i$, ..., $\alpha_n$ de la mémoire tampon.

Il en résulte que la moyenne glissante devient égale 32 à $\alpha_{def}$ et que l'estimation $V_{ref\_est}$ de la valeur consigne de référence $V_{ref}$ est forcée 33 à la valeur de consigne par défaut $V_{def} = f(\alpha_{def})$.

Le drapeau de communication perturbée **$T_{\_disturbed}$** étant validé, la valeur de consigne par défaut $V_{def}$ est affectée 35 à la valeur de consigne courante

$V_{cons}$ après une transition (38 **Transition= 1**).

Ce cas est illustré symboliquement sur les **Figures 4 et 5** pour les intervalles temps où **Com= 0**.

Dans le cas où, bien que la comparaison de la période courante T à la période prédéterminée $T_{ref}$ 27 montre que la mesure est valide, la comparaison du rapport cyclique courant $\alpha$ avec les rapports cycliques minimal $\alpha_{mIN}$ et maximal $\alpha_{MAX}$ prédéterminés 29 montre que celui-ci n'est pas conforme, le troisième compteur $\mathbf{C_{pt\_}}\alpha_{\mathbf{KO}}$ 17 est incrémenté.

Quand ce rapport cyclique courant $\alpha$ est répétitivement non conforme, c'est-à-dire que le compteur $\mathbf{C_{pt\_}}\alpha_{\mathbf{KO}}$ 17 dépasse 22 le second seuil d'invalidité $\mathbf{Thr\_}\alpha_{\mathbf{KO}}$, le drapeau de communication externe **Ext_com** est invalidé 21 **(Ext_com= 0)** et un rapport cyclique par default $\alpha_{def}$ est affecté 39 à chacun des n éléments $\alpha_1$..., $\alpha_i$, ..., $\alpha_n$ de la mémoire tampon.

Le drapeau de communication perturbée **Ext_com** étant invalidé, la valeur de consigne par défaut $V_{def}$ est affectée 35 à la valeur de consigne courante $V_{cons}$ après une transition (38 **Transition= 1**).

Ce cas est aussi illustré symboliquement sur les **Figures 4 et 5** pour les intervalles temps où **Com= 0**.

La sortie du mode interne ($V_{cons} = V_{def}$) ne doit se faire que quand on est certain des mesures. En effet, même avec une perturbation, les secondes impulsions $PWM_2$ peuvent présenter des caractéristiques courantes dans la gamme des caractéristiques nominales des premières impulsions $PWM_1$.

A cet effet, dans le procédé selon l'invention, on ne permet pas une affectation de l'estimation de la valeur de consigne de référence $V_{ref\_est}$ de la valeur de consigne de référence $V_{ref}$ à la valeur de consigne courante $V_{cons}$ dès la première mesure valide, mais seulement après que plusieurs mesures considérées comme valides aient été effectuées (par exemple trois mesures valides).

Pour ce faire, quand le drapeau de communication perturbée $\mathbf{T_{\_disturbed}}$ est validé **($T_{\_disturbed}$ =1)** mais que la période courante T est valide 40, le deuxième compteur $\mathbf{C_{pt\_}T_{OK}}$ est incrémenté 16.

Ce n'est que quand le deuxième compteur $\mathbf{Cp_t\_T_{OK}}$ 16 dépasse 24 le premier seuil de validité $\mathbf{Thr\_T_{OK}}$ que le rapport cyclique courant est pris en compte 30. Le drapeau de communication perturbée $\mathbf{T_{\_disturbed}}$ est invalidé **($T_{\_disturbed}$= 0)** et le premier compteur $\mathbf{C_{pt\_}T_{KO}}$ 15 est remis à zero 23.

De même, quand le drapeau de communication externe **Ext_com** est invalidé **(Ext_com= 0)** mais que le rapport cyclique courant $\alpha$ est valide 41, le quatrième compteur $\mathbf{C_{pt\_}}\alpha_{\mathbf{OK}}$ est incrémenté 18.

Ce n'est que quand ce quatrième compteur $\mathbf{C_{pt\_}}\alpha_{\mathbf{OK}}$ 18 dépasse 26 le second seuil de validité $\mathbf{Thr\_}\alpha_{\mathbf{OK}}$ que la mémoire tampon à décalage est rafraîchie 31. Le drapeau de communication externe **Ext_com** est validé **(Ext_com= 1)** et le troisième compteur $\mathbf{C_{pt\_}}\alpha_{\mathbf{KO}}$ 17 est réinitialisé 25.

Le procédé selon l'invention décrit ci-dessus, en liaison avec la **Figure 6,** est de préférence mis en oeuvre par programme dans des blocs numériques de calcul et de traitement constitués de microprocesseurs ou de microcontrôleurs que comprennent les dispositifs de régulation des alternateurs modernes standard.

Alternativement, tout ou partie du procédé peut être mis en oeuvre par des circuits dédiés ou des modules de logique micro câblée, tels que des réseau de portes de type FPGA.

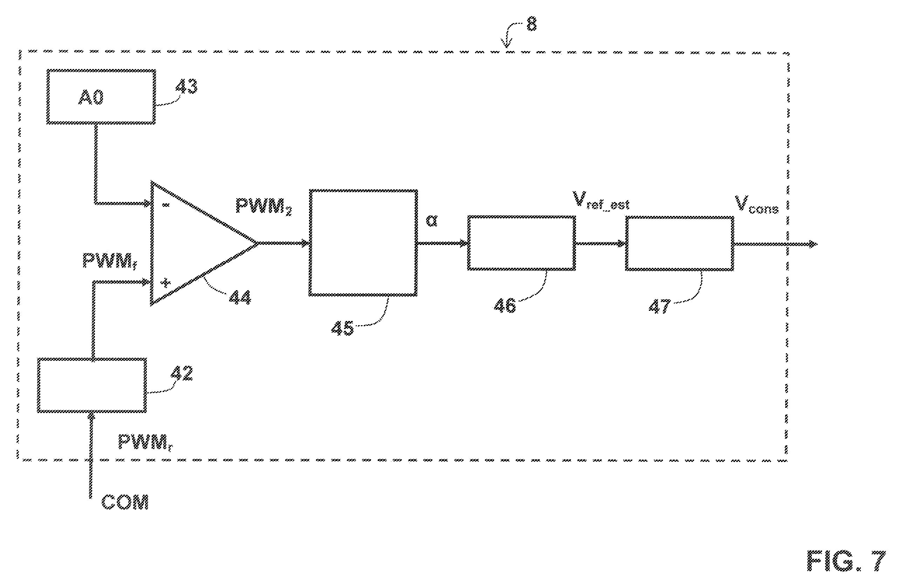

La **Figure 7** montre une architecture détaillée d'un module électronique spécifique 8 du régulateur 2 montré sur la **Figure 1** qui convient à la mise en oeuvre du procédé.

Les premières impulsions $PWM_1$ sont émises par l'unité électronique de contrôle 8 sur la ligne de communication COM du régulateur 2. Les impulsions reçues $PWM_r$ ont généralement subies des perturbations et sont appliquées à l'entrée d'un filtre capacitif 42.

Les impulsions filtrées $PWM_f$ sont comparées à un niveau de référence 43 par un comparateur 44 qui génère en sortie des secondes impulsions $PWM_2$.

Ces secondes impulsions $PWM_2$ sont traitées numériquement par un module de traitement 45 qui fournit un rapport cyclique courant $\alpha$ ou un rapport cyclique par défaut $\alpha_{def}$ à un module de calcul 46 comprenant une mémoire tampon à décalage.

A partir d'une moyenne glissante des éléments contenus dans sa mémoire tampon, le module de calcul 46 produit une estimation de la valeur de consigne de référence $V_{ref\_est}$ des premières impulsions $PWM_1$ à destination d'un module de temporisation 47, ou renvoie une valeur de consigne par défaut $V_{ref}$.

Le module de temporisation 47 génère une valeur de consigne courante $V_{cons}$ pour la boucle d'asservissement 5, en gérant en cas de perturbation de la communication COM la transition entre une valeur de consigne antérieure et la valeur de consigne par défaut $V_{ref}$.

Le module électronique spécifique 8 décrit ci-dessus confère au dispositif de régulation 2 dans lequel il est intégré la capacité de mettre en oeuvre le procédé selon l'invention.

Il en résulte que ce régulateur est susceptible de satisfaire aux tests normalisés relatifs à la protection des équipements électroniques dans le domaine de l'automobile les plus contraignants.

L'alternateur 1 qui comprendra ce régulateur 2 pourra donc bénéficier d'un avantage concurrentiel certain.

Comme il va de soi, l'invention ne se limite pas aux seuls modes de réalisation préférentiels décrits ci-dessus.

Notamment, les valeurs numériques indiquées ne sont que des exemples. Le choix de toutes autres valeurs numériques ne constituerait que des variantes de réalisation, qui ne sortiraient pas du cadre de la présente invention.

## Revendications

1. Procédé de commande d'un dispositif de régulation (2) d'un alternateur (1) de véhicule automobile asservissant une tension continue (B+, B-) d'un réseau électrique de bord alimenté par ledit alternateur (1) à une valeur de consigne courante ($V_{cons}$) en contrôlant un circuit d'excitation (4), ledit procédé étant du type de ceux consistant à :

   - transmettre audit dispositif de régulation (2) au moyen d'une ligne de communication (COM) des premières impulsions ($PWM_1$) modulées en largeur présentant une période prédéterminée ($T_{ref}$) et un rapport cyclique de référence ($\alpha_{ref}$) représentatif d'une valeur de consigne de référence ($V_{ref}$);
   - détecter lesdites premières impulsions ($PWM_1$) et générer ladite valeur de consigne courante ($V_{cons}$) ;

   **caractérisé en ce qu'**il consiste en outre, à :

   - produire des secondes impulsions ($PWM_2$) résultant desdites premières impulsions ($PWM_1$) détectées;
   - mesurer des caractéristiques courantes (T, $\alpha$) desdites secondes impulsions ($PWM_2$);
   - comparer lesdites caractéristiques courantes (T, $\alpha$) à des caractéristiques nominales ($T_{MIN}$, $T_{MAX}$, $\alpha_{MIN}$, $\alpha_{MAX}$) desdites premières impulsions ($PWM_1$);
   - affecter une valeur de consigne par défaut ($V_{def}$) à ladite valeur de consigne courante ($V_{cons}$) quand lesdites caractéristiques courantes (T, $\alpha$) sont significativement et répétitivement différentes desdites caractéristiques nominales ($T_{MIN}$, $T_{MAX}$, $\alpha_{MIN}$, $\alpha_{MAX}$).

2. Procédé de commande d'un dispositif de régulation (2) d'un alternateur (1) de véhicule automobile selon la revendication 1, **caractérisé en ce que** ladite tension de consigne par défaut ($V_{def}$) est déterminée en fonction d'un rapport cyclique par défaut ($\alpha_{def}$).

3. Procédé de commande d'un dispositif de régulation (2) d'un alternateur (1) de véhicule automobile selon l'une quelconque des revendications 1 ou 2 précédentes, **caractérisé en ce qu'**une transition entre une valeur de consigne antérieure ($V_{ref\_est}$) et ladite valeur de consigne par défaut ($V_{def}$) suit une loi temporelle prédéterminée.

4. Procédé de commande d'un dispositif de régulation (2) d'un alternateur (1) de véhicule automobile selon l'une quelconque des revendications 1 à 3 précédentes, **caractérisé en ce qu'**il consiste en outre à compter un premier nombre de fois ($C_{pt\_T_{KO}}$, $C_{pt\_\alpha_{KO}}$) où lesdites caractéristiques courantes (T, $\alpha$) sont différentes desdites caractéristiques nominales ($T_{MIN}$, $T_{MAX}$, $\alpha_{MIN}$, $\alpha_{MAX}$) et à affecter ladite valeur de consigne par défaut ($V_{def}$) à ladite valeur de consigne courante ($V_{cons}$) quand ledit premier nombre ($C_{pt\_T_{KO}}$, $C_{pt\_\alpha_{KO}}$) est supérieur ou égal à un premier seuil prédéterminé ($Thr\_T_{KO}$, $Thr\_\alpha_{KO}$).

5. Procédé de commande d'un dispositif de régulation (2) d'un alternateur (1) de véhicule automobile selon la revendication 4 précédente, **caractérisé en ce qu'**il consiste en outre à compter un second nombre de fois consécutives ($C_{pt\_T_{OK}}$, $C_{pt\_\alpha_{OK}}$) où lesdites caractéristiques courantes (T, $\alpha$) sont compatibles avec lesdites caractéristiques nominales ($T_{MIN}$, $T_{MAX}$, $\alpha_{MIN}$, $\alpha_{MAX}$) et à maintenir ladite valeur de consigne courante ($V_{cons}$) à ladite valeur de consigne par défaut ($V_{def}$) quand ledit second nombre ($C_{pt\_T_{OK}}$, $C_{pt\_\alpha_{OK}}$) est inférieur à un second seuil prédéterminé ($Thr\_T_{OK}$, $Thr\_\alpha_{OK}$).

6. Procédé de commande d'un dispositif de régulation (2) d'un alternateur (1) de véhicule automobile selon l'une quelconque des revendications 1 à 5 précédentes, **caractérisé en ce que** lesdites caractéristiques courantes (T, $\alpha$) comprennent une période courante (T) et un rapport cyclique courant ($\alpha$) et **en ce que** lesdites caractéristiques nominales ($T_{MIN}$, $T_{MAX}$, $\alpha_{MIN}$, $\alpha_{MAX}$) comprennent, d'une part, une période minimale prédéterminée ($T_{MIN}$) et une période maximale prédéterminée ($T_{MAX}$) correspondant à ladite période prédéterminée ($T_{ref}$), et d'autre part, un rapport cyclique minimal prédéterminé ($\alpha_{MIN}$) et un rapport cyclique maximal prédéterminé ($\alpha_{MAX}$) correspondant audit rapport cyclique de référence ($\alpha_{ref}$).

7. Procédé de commande d'un dispositif de régulation (2) d'un alternateur (1) de véhicule automobile selon la revendication 6 précédente, **caractérisé en ce qu'**il consiste en outre à:

   - calculer une moyenne glissante ($\alpha_{moy}$) pendant une durée prédéterminée d'une pluralité de valeurs dudit rapport cyclique courant ($\alpha_i$) comprises entre ledit rapport cyclique minimal prédéterminé ($\alpha_{MIN}$) et ledit rapport cyclique maximal prédéterminé ($\alpha_{MAX}$) quand ladite période courante (T) est comprise entre ladite période minimale prédéterminée ($T_{MIN}$) et ladite période maximale prédéterminée ($T_{MAX}$) ;
   - à déterminer ladite tension de consigne courante ($V_{cons}$) en fonction de ladite moyenne glissante ($\alpha_{moy}$).

8. Procédé de commande d'un dispositif de régulation (2) d'un alternateur (1) de véhicule automobile selon la revendication 7 précédente, **caractérisé en ce**

**qu'**il consiste en outre à affecter à ladite tension de consigne courante ($V_{cons}$) pendant ladite durée prédéterminée une dernière valeur valide de ladite moyenne glissante ($\alpha_{moy}$) quand lesdites caractéristiques courantes (T, $\alpha$) sont différentes desdites caractéristiques nominales ($T_{MIN,}$ $T_{MAX}$, $\alpha_{MIN}$, $\alpha_{MAX}$).

9. Alternateur (1) de véhicule automobile comprenant un dispositif de régulation (2) mettant en oeuvre le procédé selon l'une quelconque des revendications 1 à 8 précédentes.

**Patentansprüche**

1. Verfahren zur Steuerung einer Regelungsvorrichtung (2) eines Wechselstromgenerators (1) eines Kraftfahrzeugs, die eine Gleichspannung (B+, B-) eines vom Wechselstromgenerator (1) gespeisten Bordstromnetzes auf einen laufenden Sollwert ($V_{cons}$) regelt, indem eine Erregerschaltung (4) gesteuert wird, wobei das Verfahren von der Art ist, die darin besteht:

   - an die Regelungsvorrichtung (2) mittels einer Verbindungsleitung (COM) erste breitenmodulierte Impulse ($PWM_1$) mit einer vorbestimmten Periode ($T_{ref}$) und einem Bezugs-Tastverhältnis ($\alpha_{ref}$) zu übertragen, das für einen Bezugssollwert ($V_{ref}$) repräsentativ ist;
   - die ersten Impulse ($PWM_1$) zu erfassen und den laufenden Sollwert ($V_{cons}$) zu generieren;

   **dadurch gekennzeichnet, dass** es außerdem darin besteht:

   - zweite Impulse ($PWM_2$) zu erzeugen, die aus den erfassten ersten Impulsen ($PWM_1$) resultieren;
   - laufende Kennwerte (T, $\alpha$) der zweiten Impulse ($PWM_2$) zu messen;
   - die laufenden Kennwerte (T, $\alpha$) mit Nennkennwerten ($T_{MIN.}$ $T_{MAX}$, $\alpha_{MIN.}$ $\alpha_{MAX}$) der ersten Impulse ($PWM_1$) zu vergleichen;
   - einen Standard-Sollwert ($V_{def}$) dem laufenden Sollwert ($V_{cons}$) zuzuweisen, wenn die laufenden Kennwerte (T, $\alpha$) signifikant und wiederholt anders als die Nennkennwerte ($T_{MIN}$, $T_{MAX}$, $\alpha_{MIN}$, $\alpha_{MAX}$) sind.

2. Verfahren zur Steuerung einer Regelungsvorrichtung (2) eines Wechselstromgenerators (1) eines Kraftfahrzeugs nach Anspruch 1, **dadurch gekennzeichnet, dass** die Standard-Sollspannung ($V_{def}$) abhängig von einem Standard-Tastverhältnis ($\alpha_{def}$) bestimmt wird.

3. Verfahren zur Steuerung einer Regelungsvorrichtung (2) eines Wechselstromgenerators (1) eines Kraftfahrzeugs nach einem der vorhergehenden Ansprüche 1 oder 2, **dadurch gekennzeichnet, dass** ein Übergang zwischen einem vorherigen Sollwert ($V_{ref\_est}$) und dem Standard-Sollwert ($V_{def}$) einem vorbestimmten Zeitgesetz folgt.

4. Verfahren zur Steuerung einer Regelungsvorrichtung (2) eines Wechselstromgenerators (1) eines Kraftfahrzeugs nach einem der vorhergehenden Ansprüche 1 bis 3, **dadurch gekennzeichnet, dass** es außerdem darin besteht, eine erste Anzahl von Malen ($C_{pt\_}T_{KO}$, $C_{pt-}\alpha_{KO}$) zu zählen, wo die laufenden Kennwerte (T, $\alpha$) sich von den Nennkennwerten ($T_{MIN.}$ $T_{MAX}$, $\alpha_{MIN}$, $\alpha_{MAX}$) unterscheiden, und den Standard-Sollwert ($V_{def}$) dem laufenden Sollwert ($V_{cons}$) zuzuweisen, wenn die erste Anzahl ($C_{pt\_}T_{KO}$, $C_{pt-}\alpha_{KO}$) größer als eine oder gleich einer ersten vorbestimmten Schwelle (Thr\_$T_{KO}$, Thr\_$\alpha_{KO}$) ist.

5. Verfahren zur Steuerung einer Regelungsvorrichtung (2) eines Wechselstromgenerators (1) eines Kraftfahrzeugs nach dem vorhergehenden Anspruch 4, **dadurch gekennzeichnet, dass** es außerdem darin besteht, eine zweite Anzahl von aufeinanderfolgenden Malen ($C_{pt\_}T_{OK}$, $C_{pt-}\alpha_{OK}$) zu zählen, wo die laufenden Kennwerte (T, $\alpha$) mit den Nennkennwerten ($T_{MIN}$, $T_{MAX}$, $\alpha_{MIN}$, $\alpha_{MAX}$) kompatibel sind, und den laufenden Sollwert ($V_{cons}$) auf dem Standard-Sollwert ($V_{def}$) zu halten, wenn die zweite Anzahl ($C_{pt\_}T_{OK}$, $C_{pt-}\alpha_{OK}$) geringer als eine zweite vorbestimmte Schwelle (Thr\_$T_{OK}$, Thr\_$\alpha_{OK}$) ist.

6. Verfahren zur Steuerung einer Regelungsvorrichtung (2) eines Wechselstromgenerators (1) eines Kraftfahrzeugs nach einem der vorhergehenden Ansprüche 1 bis 5, **dadurch gekennzeichnet, dass** die laufenden Kennwerte (T, $\alpha$) eine laufende Periode (T) und ein laufendes Tastverhältnis ($\alpha$) enthalten, und dass die Nennkennwerte ($T_{MIN}$, $T_{MAX}$, $\alpha_{MIN}$, $\alpha_{MAX}$) einerseits eine vorbestimmte minimale Periode ($T_{MIN}$) und eine vorbestimmte maximale Periode ($T_{MAX}$) entsprechend der vorbestimmten Periode ($T_{ref}$), und andererseits ein vorbestimmtes minimales Tastverhältnis ($\alpha_{MIN}$) und ein vorbestimmtes maximales Tastverhältnis ($\alpha_{MAX}$) entsprechend dem Bezugs-Tastverhältnis ($\alpha_{ref}$) enthalten.

7. Verfahren zur Steuerung einer Regelungsvorrichtung (2) eines Wechselstromgenerators (1) eines Kraftfahrzeugs nach dem vorhergehenden Anspruch 6, **dadurch gekennzeichnet, dass** es außerdem darin besteht:

   - einen gleitenden Mittelwert ($\alpha_{moy}$) während einer vorbestimmten Dauer einer Vielzahl von Werten des laufenden Tastverhältnisses ($\alpha_i$) zu berechnen, die zwischen dem vorbestimmten minimalen Tastverhältnis ($\alpha_{MIN}$) und dem vorbestimmten maximalen Tastverhältnis ($\alpha_{MAX}$) liegen, wenn die laufende Periode (T) zwischen der vorbestimmten minimalen Periode ($T_{MIN}$) und der vorbestimmten maximalen Periode ($T_{MAX}$) liegt;
- die laufende Sollspannung ($V_{cons}$) abhängig vom gleitenden Mittelwert ($a_{moy}$) zu bestimmen.

8. Verfahren zur Steuerung einer Regelungsvorrichtung (2) eines Wechselstromgenerators (1) eines Kraftfahrzeugs nach dem vorhergehenden Anspruch 7, **dadurch gekennzeichnet, dass** es außerdem darin besteht, der laufenden Sollspannung ($V_{cons}$) während der vorbestimmten Dauer einen letzten gültigen Wert des gleitenden Mittelwerts ($\alpha_{moy}$) zuzuweisen, wenn die laufenden Kennwerte (T, $\alpha$) anders als die Nennkennwerte ($T_{MIN}$, $T_{MAX}$, $\alpha_{MIN}$, $\alpha_{MAX}$) sind.

9. Wechselstromgenerator (1) eines Kraftfahrzeugs, der eine Regelungsvorrichtung (2) enthält, die das Verfahren nach einem der vorhergehenden Ansprüche 1 bis 8 anwendet.

## Claims

1. Method for controlling a regulation device (2) of a motor vehicle alternator (1) automatically controlling a direct voltage (B+, B-) of an onboard electrical network powered by said alternator (1) at a current setpoint value ($V_{cons}$) by controlling an excitation circuit (4), said method being of the type of those consisting in:

- transmitting to said regulation device (2) by means of a communication line (COM) first width-modulated pulses ($PWM_1$) exhibiting a predetermined period ($T_{ref}$) and a reference duty cycle ($\alpha_{ref}$) representative of a reference setpoint value ($V_{ref}$) ;
- detecting said first pulses ($PWM_1$) and generating said current setpoint value ($V_{cons}$);

**characterized in that** it further consists in:

- producing second pulses ($PWM_2$) resulting from said first pulses ($PWM_1$) detected;
- measuring current characteristics (T, $\alpha$) of said second pulses ($PWM_2$);
- comparing said current characteristics (T, $\alpha$) with nominal characteristics ($T_{MIN}$, $T_{MAX}$, $\alpha_{MIN}$, $\alpha_{MAX}$) of said first pulses ($PWM_1$) ;
- assigning a default setpoint value ($V_{def}$) to said current setpoint value ($V_{cons}$) when said current

characteristics (T, $\alpha$) are significantly and repetitively different from said nominal characteristics ($T_{MIN}$, $T_{MAX}$, $\alpha_{MIN}$, $\alpha_{MAX}$).

2. Method for controlling a regulation device (2) of a motor vehicle alternator (1) according to Claim 1, **characterized in that** said default setpoint voltage ($V_{def}$) is determined as a function of a default duty cycle ($\alpha_{def}$) .

3. Method for controlling a regulation device (2) of a motor vehicle alternator (1) according to either one of the preceding Claims 1 and 2, **characterized in that** a transition between a prior setpoint value ($V_{ref\_est}$) and said default setpoint value ($V_{def}$) follows a predetermined time law.

4. Method for controlling a regulation device (2) of a motor vehicle alternator (1) according to any one of the preceding Claims 1 to 3, **characterized in that** it further consists in counting a first number of times ($C_{pt\_T_{KO}}$, $C_{pt\_\alpha_{KO}}$) when said current characteristics (T, $\alpha$) are different from said nominal characteristics ($T_{MIN}$, $T_{MAX}$, $\alpha_{MIN}$, $\alpha_{MAX}$) and in assigning said default setpoint value ($V_{def}$) to said current setpoint value ($V_{cons}$) when said first number ($C_{pt\_T_{KO}}$, $C_{pt\_\alpha_{KO}}$) is greater than or equal to a first predetermined threshold (Thr_$T_{KO}$, Thr_$\alpha_{KO}$).

5. Method for controlling a regulation device (2) of a motor vehicle alternator (1) according to the preceding Claim 4, **characterized in that** it further consists in counting a second number of consecutive times ($C_{pt\_T_{OK}}$, $C_{pt\_\alpha_{OK}}$) when said current characteristics (T, $\alpha$) are compatible with said nominal characteristics ($T_{MIN}$, $T_{MAX}$. $\alpha_{MIN}$, $\alpha_{MAX}$) and in keeping said current setpoint value ($V_{cons}$) at said default setpoint value ($V_{def}$) when said second number ($C_{pt\_T_{OK}}$, $C_{pt\_\alpha_{OK}}$) is less than a second predetermined threshold (Thr_$T_{OK}$, Thr_$\alpha_{OK}$) .

6. Method for controlling a regulation device (2) of a motor vehicle alternator (1) according to any one of the preceding Claims 1 to 5, **characterized in that** said current characteristics (T, $\alpha$) comprise a current period (T) and a current duty cycle ($\alpha$) and **in that** said nominal characteristics ($T_{MIN}$, $T_{MAX}$, $\alpha_{MIN}$, $\alpha_{MAX}$) comprise, on the one hand, a predetermined minimum period ($T_{MIN}$) and a predetermined maximum period ($T_{MAX}$) corresponding to said predetermined period ($T_{ref}$), and, on the other hand, a predetermined minimum duty cycle ($\alpha_{MIN}$) and a predetermined maximum duty cycle ($\alpha_{MAX}$) corresponding to said reference duty cycle ($\alpha_{ref}$).

7. Method for controlling a regulation device (2) of a motor vehicle alternator (1) according to the preceding Claim 6, **characterized in that** it further consists in:

- computing a sliding average ($\alpha_{moy}$), for a predetermined duration, of a plurality of values of said current duty cycle ($\alpha_i$) lying between said predetermined minimum duty cycle ($\alpha_{MIN}$) and said predetermined maximum duty cycle ($\alpha_{MAX}$) when said current period (T) lies between said predetermined minimum period ($T_{MIN}$) and said predetermined maximum period ($T_{MAX}$);
- determining said current setpoint voltage ($V_{cons}$) as a function of said sliding average ($\alpha_{moy}$).

8. Method for controlling a regulation device (2) of a motor vehicle alternator (1) according to the preceding Claim 7, **characterized in that** it further consists in assigning to said current setpoint voltage ($V_{cons}$), for said predetermined duration, a last valid value of said sliding average ($\alpha_{moy}$) when said current characteristics (T, $\alpha$) are different from said nominal characteristics ($T_{MIN}$, $T_{MAX}$, $\alpha_{MIN}$, $\alpha_{MAX}$).

9. Motor vehicle alternator (1) comprising a regulation device (2) implementing the method according to any one of the preceding Claims 1 to 8.

EP 2 856 630 B1

Fig. 1

Fig. 2a

Fig. 2b

Fig. 3a

Fig. 3b

Fig. 3c

13

EP 2 856 630 B1

PWM₂

12
12
12
11
12
11

Com = 1    Com = 0    Com = 1    Com = 0

t

$V_{ref\_est}$    $V_{def}$    $V_{ref\_est}$    $V_{def}$

Fig. 4

PWM₂

Com = 1    Com = 0

t

$V_{cons}$
$V_{ref\_est}$
$V_{def}$

13

D

t

$V_{ref\_est}$    $V_{ref\_est}$    $V_{def}$

Fig. 5

14

Fig. 6

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2757325
- FR 2938135